# EUROPEAN PATENT SPECIFICATION

(11) **EP 2 855 355 B1**
(45) Date of publication and mention of the grant of the patent: **31.03.2021**
(21) Application number: 13732646.8
(22) Date of filing: 04.06.2013
(51) Int. Cl.: B01D 61/00, C01D 3/06, C02F 1/52, C02F 103/08, B01D 9/00, C01D 3/16, B01D 61/36, C02F 1/44, C01D 3/24

(54) **CRYSTALLISATION ASSISTED MEMBRANE SEPARATION PROCESS**
KRISTALLISIERUNGSUNTERSTÜTZTES MEMBRANTRENNVERFAHREN
PROCÉDÉ DE SÉPARATION DE MEMBRANE ASSISTÉE DE CRISTALLISATION

(30) Priority: 04.06.2012 EP 12170700
(43) Date of publication of application: 08.04.2015
(73) Proprietor: Stichting Wageningen Research, 6708 PB Wageningen (NL)
(72) Inventor: VAN MEDEVOORT, Jolanda, 6715 JR Ede (NL); CREUSEN, Raimond Johannes Maria, 3822 VE Amersfoort (NL); ROELANDS, Cornelis Petrus Marcus, 2628 VK Delft (NL); VAN RENESSE VAN DUIVENBODE, Johannes Alexander Diederik, 2628 VK Delft (NL)
(74) Representative: V.O.
(86) International application number: PCT/NL2013/050395
(87) International publication number: WO 2013/183993

(56) References cited:
- WO-A1-2004/096404
- DE-C- 881 190
- US-A1- 2011 180 479
- US-A1- 2012 097 609

## Description

The invention is directed to a process for separating a first compound from an aqueous feed stream wherein the first compound is dissolved.

In many processes in industry wastewater streams are produced that have substantial concentrations of dissolved compounds, such as salts. Discharging such streams into the environment is subject to increasingly strict regulations. In particular the discharge of salt wastewater streams is subject to strict regulations and is often not allowed. There is an increasing demand for technologies to process these waste streams, which technologies ideally are capable of separating the waste streams into pure water and solid compounds. The available technologies, however, are not suitable to do this economically, with sufficient separation quality and with good energy efficiency.

Many thermal and evaporation methods for desalination of seawater or brine to produce pure water and more concentrated brine are known. These methods, however, suffer from scaling and corrosion problems and have high energy consumption. Moreover, the produced brine has to be discharged or further processed.

Primarily because of the high energy costs involved for thermal processes, many recent desalination methods are based on membrane separation. Examples of desalination methods based on membrane separation are membrane distillation (MD), osmotic distillation (OD), nanofiltration (NF), reverse osmosis (RO), electrodialysis (ED) and electrodialysis reversal (EDR).

Membrane separation methods like RO and NF are not suitable for use at high salt concentrations, because of the high osmotic pressure of the water. A technique like MD/OD is suitable for high concentration, but not for crystallisation, because of crystallisation of salts at the membrane external and internal surface, resulting in clogging of the membrane and a decreased flux through the membrane. Desalination of salt water with these methods results in a more concentrated brine waste stream. An energy efficient method for the processing of aqueous feed streams, in particular brine waste streams is therefore desirable.

Tun et al. (Journal of Membrane Science 2005, 275, 144-155) describe membrane distillation crystallization of concentrated salts and report a flux decrease caused by concentration and temperature polarization as well as vapour pressure lowering at high solute concentration.

Ji et al. (Separation and Purification Technology 2010, 71, 76-82) describe membrane distillation-crystallization of seawater reverse osmosis brines and report that preventing encrustations or irremovable deposits of solids on the membrane remained a crucial task in order to achieve long-term stability of the process. NaCl crystals formed on the membrane.

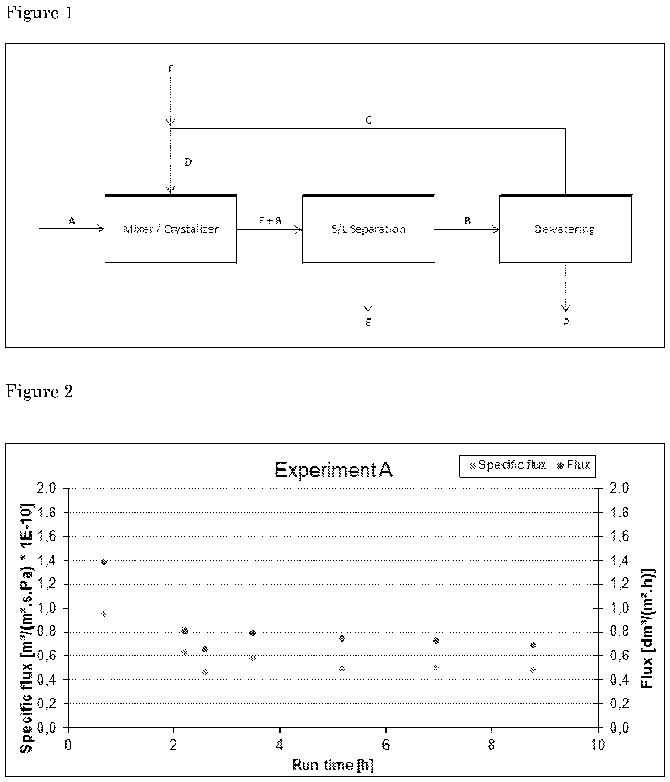

WO-A-2004/096404 describes a process comprising induced crystallisation induced by an antisolvent, membrane reverse osmosis and nanofiltration to make inorganic salt compositions, drinking and/or process water from a solution. This process does not comprise membrane distillation or osmotic distillation. In this process, for example PEG600 (polyethylene glycol having an average molecular weight of 600 g/mol) is used as antisolvent to induce crystallisation of dissolved NaCl. This process has the disadvantage that a foreign substance is introduced, which can contaminate the products. Furthermore, at least 60 % of the retentate of the reverse osmosis step is subjected to a membrane nanofiltration step for recovery of the crystallisation agent. This document applies antisolvent induced crystallisation to mitigate a particular problem of a reverse osmosis step that is used in the process, namely the high pressures required in case of high osmotic pressure, such as 300 bars in case of saturated brine. Claim 11 of WO-A-2004/096404 indicates that the antisolvent can comprise certain inorganic salts, however these salts are crystal growth inhibitors and do not induce crystallisation. WO-A-2004/096404 illustrates in figure 2 a process wherein salt solution is supplied to a crystalliser/settler and wherein antisolvent is also supplied to the crystalliser/settler. Supernatant from the crystallizer is supplied to a reverse osmosis unit. The concentrated antisolvent stream is split in a first part sent to a nanofiltration unit and a second part sent to the crystalliser/settler. A list of antisolvents is given in claim 10 of WO-A-2004/096404 which antisolvents are not inorganic salts.

US 2012/097609 describes a method for treatment of an aqueous oily solution, the method comprising: combining the aqueous oily solution with one or more miscible organic solvents to produce a mixture of precipitated solids and a liquid phase; separating the precipitated solids from the liquid phase; separating the liquid phase at least into an organic phase and an aqueous phase; and removing at least a portion of one or more oily substances from the organic phase. The method does not use inorganic salt as crystallization agent.

Antisolvent assisted crystallisation of sodium chloride using amines is described in T.G. Zijlema, "The Antisolvent Crystallization of Sodium Chloride", Delft University Press, Delft, 1999. The use of a membrane separation step is not disclosed.

In summary, the most important shortcomings of the prior art membrane distillation crystallisation processes are crystallisation in and at the external and internal membrane surface at the retentate side of the membrane resulting in clogging of the membrane, the production of a more concentrated brine waste stream which has to be further processed or discharged into the environment, high energy costs and risk of contamination of the products because of the addition of foreign substances to the feed stream.

Objective of the invention is to provide a solution to one or more of the above-mentioned disadvantages.

The inventors found that this objective can at least in part be met by a process according to claim 1.

The invention advantageously allows for a process wherein crystallisation in and at the external and internal membrane surface at the retentate side of the membrane is prevented or at least reduced, in particular of the membrane of the membrane separation process. With this invention, the production of a more concentrated brine waste stream is avoided and energy costs and risk of contamination are minimised.

One or more compounds may be separated as first compound from the feed stream by the process. At least part of the first compound is caused to crystallise by adding a crystallisation agent to the feed stream. The crystallisation agent can therefore also be referred to as precipitant and precipitation agent.

The addition of the crystallisation agent may occur continuously, periodically or once. The crystallisation agent and feed stream may be mixed during the addition and crystallisation.

In the present invention, the crystallisation agent comprises a second compound with a higher solubility in water than the first compound; and said second compound comprises a compound dissolved in the feed stream different from the first compound, and the second compound comprises an inorganic salt.

The crystallisation agent can suitably comprise a solid material, liquid, a solution and/or a mixture. The crystallisation agent preferably comprises an aqueous solution of the second compound. This provides the advantage that no organic solvent is required, providing reduced risk of contamination of products of the process.

The first compound and second compound are different from each other. The crystallisation agent may comprise multiple second compounds each with a higher solubility in water than the first compound.

In case of multiple first compounds, the second compound has a higher solubility in water than the first compounds. By addition of the crystallisation agent, the solubility of the first compound is reduced, causing crystallisation of the first compound. This results in a mixture of crystals and a liquid. The crystals comprise at least part of the first compound, preferably 50 wt.% or more, more preferably 80 wt.% or more, more preferably 90 wt.% or more of the first compound relative to the amount of the first compound in the feed stream volume from which the crystals were obtained. The crystals comprise preferably 75 wt.% or more first compound by the total weight of the crystals, more preferably at 90 wt.% or more, most preferably 99 wt.% or more. The supernatant comprises at least part of the crystallisation agent, preferably 99 wt.% or more, relative to the amount of crystallisation agent added to cause the formation of the supernatant.

The crystals may consist of particles. At least part of the crystals is separated from the liquid, leaving a supernatant and the separated crystals. Suitable separation processes include filtration, decanting, centrifugation, sedimentation, hydro cyclones and any other solid/liquid separation technologies and combinations of these. The crystals are not necessarily free of water; the crystals may contain bound water and/or water of crystallisation. The crystals may contain some crystallisation agent and/or second compound, preferably less than 1 wt.%, more preferably less than 0.1 wt.% based on total weight of the crystals.

At least part of the supernatant is subjected to a membrane separation process, comprising membrane distillation, osmotic distillation or a combination of both. Preferably, the membrane separation process comprises osmotic distillation. Osmotic distillation is in particular preferred in case of a feed stream comprising seawater, seawater concentrate and/or sodium chloride brine.

The skilled person understands that membrane distillation relates to any membrane process wherein a vapour is selectively passed through a membrane that is impermeable to the liquid phase (such as water vapour and water) and wherein the driving force is a partial vapour pressure difference provided at least in part by a temperature gradient over the membrane.

Osmotic distillation refers to a membrane process wherein a vapour is selectively passed through a membrane that is impermeable to the liquid phase (such as water vapour and water) and wherein the driving force is a partial vapour pressure difference provided at least in part by a gradient in solute concentrations (difference in solute concentrations between retentate and distillate side), and consequently in water activity over the membrane. In case of osmotic distillation, a temperature gradient over the membrane can be positive; it can also be zero or negative.

A combination of osmotic distillation and membrane distillation preferably comprises an integrated membrane separation process wherein the driving force over a membrane is provided partly by a (positive) temperature gradient and partly by a solute concentration gradient.

The membrane separation process comprises reducing the amount of water (mass fraction of water) in the supernatant, producing a concentrate. Water is suitably obtained as distillate or component of the distillate at the opposite side of the membrane, opposite to the membrane side in contact with the concentrate. Water so obtained is a product of the process. The distillate is preferably pure water, preferably the concentration of second compound in the distillate is 2 wt.% or less of the concentration of the second compound in the supernatant.

The process further comprises adding at least part of the concentrate to the feed stream as crystallisation agent; preferably 50 wt.% or more of the concentrate, more preferably 90 wt.% or more, even more preferably 95 wt.% or more. This provides the advantage that the crystallisation agent, in particular the second compound, is at least partly recycled, resulting in reduced consumption of crystallisation agent and/or second compound. The concentrate is preferably directly added without a further membrane separation process.

Preferably, the crystallisation agent comprises at least part of the concentrate, preferably the crystallisation agent comprises 50 wt.% or more concentrate, more preferably 90 wt.% or more, based on total weight of the crystallisation agent.

Preferably, the first compound comprises one or more selected from the group consisting of inorganic salts, organic salts, organic compounds, polymers, sugars and proteins. Preferably, the first compound comprises a salt, more preferably an inorganic salt, more preferably sodium chloride. Suitably, the first compound is sodium chloride.

Preferably, the feed stream comprises one or more selected from the group consisting of seawater, seawater concentrate and sodium chloride brine. In particular in case the first compound comprises sodium chloride, the feed stream suitably comprises one or more selected from the group consisting of seawater, seawater concentrate and sodium chloride brine.

Preferably, the feed stream comprises an aqueous inorganic salt solution, more preferably a sodium chloride solution, for example seawater, ground water, a process waste stream and/or brine. The feed stream can comprise a waste stream produced by a membrane separation process and/or dewatering process, such as reverse osmosis, multi stage flash distillation and/or multi effect distillation. For example, the feed stream can comprise a wastewater stream from a dewatering process, such as the Memstill® process described in WO-A-2000/72947.

The second compound comprises a compound dissolved in the feed stream different from the first compound.

Specifically, in the invention of claim 1 the second compound comprises a salt, and the anion and cation of that salt are preferably selected from the group consisting of anions and cations, respectively, present in the feed stream.

The second compound comprises a compound dissolved in the feed stream different from the first compound. The second compound is not foreign to the feed stream. The feed stream comprises the second compound, as solute. This provides the advantage that contamination of products of the process due to addition of the second compound is avoided.

The second compound comprises an inorganic salt, preferably sulphates, chlorates, chlorides and phosphates soluble in water. Preferably the second compound comprises one or more selected from the group consisting of magnesium chloride, calcium chloride, potassium chloride, magnesium bromide, calcium bromide and potassium bromide; more preferably magnesium chloride, calcium chloride and potassium chloride. Most preferably the second compound comprises calcium chloride and/or magnesium chloride.

Preferably, the second compound comprises a salt selected from the group consisting of salts with a common ion with the first compound. This provides the advantageous common ion effect, reducing the solubility of the first compound.

Preferably, the crystallisation agent has a higher concentration of the common ion than the feed stream. In case the first compound is sodium chloride, the crystallisation agent preferably has a higher concentration of chloride ions than the feed stream. Preferably, the crystallisation agent has such a concentration of chloride ions and is added in such amounts to the feed stream that the concentration of chloride ions in the mixture obtained after addition of the crystallisation agent to the feed stream is higher than the saturation concentration with respect to sodium chloride. Preferably, the first compound is a monovalent cation salt and the second compound a divalent cation salt with a common anion, such as chloride.

In case the first compound comprises a metal chloride, such as sodium chloride, the second compound preferably comprises one or more selected from the group consisting of alkali chlorides and alkali earth metal chlorides with a higher solubility than sodium chloride; such as calcium chloride, potassium chloride and magnesium chloride in case the first compound comprises sodium chloride. Preferably, the second compound comprises an aqueous calcium chloride and/or magnesium chloride solution. In case the feed stream comprises one or more selected from the group consisting of seawater, seawater concentrate and sodium chloride brine, the second compound preferably comprises magnesium chloride.

The concentration of the first compound in the supernatant is lower than the concentration of the first compound in the feed stream.

Preferably, the concentration of the first compound in the supernatant is reduced by 50 % or more, more preferably 80 % or more, more preferably 90 % or more, compared to the concentration of the first compound in the feed stream.

For an amount of feed stream a corresponding, not necessarily equal, amount of supernatant is obtained. Preferably, the amount of the first compound in an amount of the supernatant is 50 wt.% or less, preferably 20 wt.% or less, more preferably 10 wt.% or less, of the amount of the first compound in the amount of the feed stream from which said amount of supernatant was obtained. In this way, effective separation of the first compound from the feed stream is obtained.

Preferably, the concentration of the second compound in the supernatant is 90 % or less of its saturation concentration, more preferably 80 % or less, more preferably 75 % or less, more preferably 50 % or less. This provides the advantage that at least some water can be extracted from the supernatant in the membrane separation process to produce concentrate and water, without the second compound concentration becoming larger than the saturation concentration of the second compound. The saturation concentration relates to the operating conditions, such as temperature, during crystallisation and separation of the precipitate, as well as during the membrane separation process. This provides reduced deposition of the second compound during the membrane separation process.

Preferably, during the membrane separation process a first side of the membrane is contacted with the supernatant and a second side is contacted with a drawing liquid.

The side of the membrane in contact with the supernatant is referred to as the retentate side, the other side is referred to as the distillate and/or permeate side.

In membrane distillation, water vapour passes through a membrane from the retentate side to the distillate side, due to a water vapour pressure drop over the membrane. The skilled person understands that in case the membrane separation step comprises membrane distillation, the driving force for transport of vapour through the membrane is at least in part provided by a temperature difference between the retentate and distillate side of the membrane.

This has the advantage that (almost) pure water vapour passes through the membrane. The water is obtained at the distillate side.

The drawing liquid may be used to establish a water vapour pressure at the distillate side of the membrane lower than the water vapour pressure at the retentate side. A drawing liquid suitably comprises a drawing agent capable of decreasing the vapour pressure of water in the aqueous solution. Preferred drawing agents include calcium chloride, lithium chloride, magnesium chloride, potassium chloride, and magnesium bromide. Optionally, the drawing agent and the second compound are the same. Suitable drawing liquid include 20-45 wt.% aqueous CaCl₂ solution, such as 30-45 wt.% and/or 40-45 wt.% aqueous CaCl₂ solution.

The water vapour pressure difference may also be obtained by a combination of drawing liquid and temperature difference between the distillate and retentate side of the membrane. For example, if the membrane separation process is carried out in a module comprising a membrane, an inlet for supernatant and an outlet for concentrate, both at the retentate side of the membrane, and if the supernatant is composed of 9 mol water, 1 mol calcium chloride and saturated in NaCl at 80 °C, the boiling point elevation is 21.4 °C. If the amount of water is decreased to for example 4 mol at the outlet, the boiling point elevation is 36.7 °C at the outlet. Using for example a 35 wt.% calcium chloride solution as drawing liquid, the boiling point elevation to be overcome is 7.2 °C at the inlet and 22.5 °C at the outlet. An additional temperature difference is required for realisation of water vapour flux through the membrane that depends on the temperature. The membrane separation process can occur at various temperatures. For osmotic distillation and for membrane distillation, a higher temperature of both the supernatant and distillate is preferred because it provides a larger vapour pressure and therefore water flux through the membrane at the same temperature difference between supernatant and distillate.

In order to recover water from the distillate, at least part of the distillate may be directed to a separation process for separating the drawing agent from water. Suitable separation processes include multi effect distillation, vapour compression evaporation, any other evaporation technology and combinations of these. Such a separation process can also be a membrane separation process, e.g. membrane distillation.

Accordingly, the membrane separation process preferably comprises membrane distillation or osmotic distillation and in addition one or more selected from the group consisting of membrane distillation, forward osmosis and osmotic distillation; preferably osmotic distillation.

Osmotic distillation refers to a membrane process wherein the driving force is at least in part provided by a gradient in difference in solute concentrations, as described hereinabove. Osmotic distillation can be combined with a temperature difference over the membrane, such as a positive temperature difference (the temperature of the distillate is larger than the temperature of the liquid at the retentate side). In case of osmotic distillation, the temperature difference can also be zero or negative (the temperature of the distillate is smaller than the temperature of the liquid at the retentate side). The additional steps can be downstream the membrane distillation, osmotic distillation or a combination of both, for further processing of the distillate obtained therefrom.

Preferably, the concentration of the drawing agent in the drawing liquid is such that the separation of the drawing agent from water occurs in a single separation step. Recovered drawing agent is suitably recycled to the distillate side of the membrane of the process in which the supernatant is concentrated. Preferably the drawing agent concentration in the drawing liquid is below the saturation point of the drawing agent, to prevent crystal formation during regeneration of the drawing agent. Preferably the concentration is 95 % or less, more preferably 85 % or less of its saturation concentration.

The membrane process step may comprise one or more membranes and accordingly multiple membrane separation steps, wherein permeate/distillate of a first membrane separation step is subjected to a further membrane separation step, for example for recovery of drawing agent.

Preferably, the process further comprises concentrating the feed stream prior to adding crystallisation agent. This provides the advantage of a more effective process. Suitable processes for concentrating the feed stream include membrane distillation processes, such as the Memstill® process, described in WO-A-2000/72947, and the process described in WO-A-2012/081981.

Preferably, the process further comprises washing at least part of the separated crystals. At least part of the separated crystals, preferably all, can be washed one or multiple times. By washing, impurities can be removed. Moreover, washing can be used for recovery of at least part of crystallisation agent in the crystals. Crystallisation agent so recovered can be recycled in the process of the invention.

Optionally, the process further comprises drying, to at least some extent, of at least part of the crystals, without washing or after washing of the crystals.

Preferably, the process further comprises replenishing the crystallisation agent at least in part. In particular, the second compound is replenished by adding suitable amounts of the second compound to the crystallisation agent. This provides the advantage of mitigating the effect of the crystallisation of some second compound in the crystals. The second compound can be added to the concentrate, or to any other part of the process (*e.g.* to the feed stream).

Preferably, 50 wt.% or more of the first compound in the feed stream is crystallised and separated. Any first compound that is not crystallised or not separated (from the liquid) remains in the supernatant.

More preferably, 80 wt.% or more, most preferably 90 wt.% or more of the first compound in the feed stream is crystallised and separated. Preferably, these amounts of the first compound crystallise and are separated in one pass. If not, the first compound remaining in the supernatant will remain (partly) in the concentrate and be recycled with the concentrate, allowing for multiple passes through the process.

An amount of the first compound in the separated crystals corresponds to an amount of the feed stream from which the amount of the first compound was obtained; this corresponding amount of feed stream comprises the corresponding amount of the first compound in the feed stream, suitably as solute.

The process according to the present invention can be a continuous process or a batch process. Preferably, the process is a continuous process. This allows for large scale application.

Preferably, the crystallisation occurs at an operating temperature that is the same as the temperature of the feed stream or in a 20 °C range, preferably 10 °C, more preferably 5 °C range, above and below the temperature of the feed stream. Optionally, the membrane separation process is carried out at a temperature in a 20 °C range, preferably 10 °C, more preferably 5 °C range, around the temperature of the feed stream and/or the temperature of the crystallisation step. This allows for the crystallisation step to occur without or with only limited cooling/heating, providing better energy efficiency.

The process can optionally be carried out in the temperature range of 5-120 °C, preferably in the range of 20-100 °C and more preferably in the range of 50-90 °C.

The invention is now further illustrated by the following non-limiting figures and examples.

Figure 1: Process scheme of an exemplary process according to an embodiment of the invention. Feed stream A is subjected to crystallisation in a mixer/crystalliser (step 1); by addition of crystallisation agent D. Crystals E are formed. Crystals E and supernatant B are separated in a solid liquid (S/L) separation step (step 2). Supernatant B is subjected to a membrane separation process in a dewatering step (step 3), providing water as product P and concentrate C. Concentrate C is recycled as part of crystallization agent D. Crystallization agent D is replenished by addition of second compound F. Stream D thus consist of the combined streams of concentrate C and second compound F.

### Example 1

Product streams according to an embodiment of the process have been simulated for three passes at 80 °C using OLI analyzer 3.1.1 (OLI Systems Inc.). Feed stream A was calculated to be obtained from sea water composed of 55.51 mol H₂O and dissolved compounds according to table 1, to which was added 537 mmol HCl to obtain pH 8.3 and wherein the amount of water was reduced to 4 mol H₂O by membrane distillation step MD I. The solids formed during MD I are given in table 2 and are present in feed stream A. In the first pass, 5 mol water and 1 mol CaCl₂ are added as crystallisation agent D in step 1. The composition of the formed crystals E is given in table 3. The composition of the supernatant B is given in table 4.

The supernatant B is subjected to membrane distillation step 2, in which the amount of water is reduced to 5 mol H₂O. The composition of the concentrate C is given in table 5. Solids formed during step 2 are present in the concentrate C and are given in table 6. Crystallization agent D is composed in the second and third pass of the concentrate C obtained in the previous pass and CaCl₂ replenishment solution F as necessary to contain set amounts of 1 mol CaCl₂ and 5 mol H₂O.

**Tabel 1: Feed**

| Element | Concentration (mg/l) | Element | Concentration (mg/l) |
|---|---|---|---|
| Oxygen | 8.57 × 10⁵ | Molybdenum | 0.01 |
| Hydrogen | 1.08 × 10⁵ | Zinc | 0.01 |
| Chlorine | 19000 | Nickel | 0.0054 |
| Sodium | 10500 | Arsenic | 0.003 |
| Magnesium | 1350 | Copper | 0.003 |
| Sulphur | 885 | Tin | 0.003 |
| Calcium | 400 | Uranium | 0.003 |
| Potassium | 380 | Chromium | 0.0003 |
| Bromine | 65 | Krypton | 0.0025 |
| Carbon | 28 | Manganese | 0.002 |
| Strontium | 8.1 | Vanadium | 0.001 |
| Boron | 4.6 | Titanium | 0.001 |
| Silicon | 3 | Caesium | 0.0005 |
| Fluorine | 1.3 | Cerium | 0.0004 |
| Argon | 0.6 | Antimony | 0.00033 |
| Nitrogen | 0.5 | Silver | 0.0003 |
| Lithium | 0.18 | Yttrium | 0.0003 |
| Rubidium | 0.12 | Cobalt | 0.00027 |
| Phosphorus | 0.07 | Neon | 0.00014 |
| Iodine | 0.06 | Cadmium | 0.00011 |
| Barium | 0.03 | Tungsten | 0.0001 |
| Aluminium | 0.01 | Lead | 0.00005 |
| Iron | 0.01 | Mercury | 0.00003 |
| Indium | < 0.02 | Selenium | 0.0000 |

**Table 2**

| **Component** | **Solids in Feed A (mol)** |
|---|---|
| **Calcium** | 1.529 × 10⁻³ |
| **carbonate** | |
| **Glauberite** | 7.991 × 10⁻³ |
| **Silicon dioxide** | 2.512 × 10⁻⁵ |
| **(trigonal)** | |

**Table 3: Solids separated from mixer/separator (mol)**

| **Component** | **Pass 1** | **Pass 2** | **Pass 3** |
|---|---|---|---|
| **Sodium chloride** | 0.3692 | 0.4347 | 0.4689 |
| **Calcium carbonate** | 2.038 × 10⁻³ | 2.083 × 10⁻³ | 2.099 × 10⁻³ |
| **Calcium sulphate** | 0.0275 | 0.0276 | 0.0276 |
| **Fluorapatite** | 7.529 × 10⁻⁷ | 7.532 × 10⁻⁷ | 7.531 × 10⁻⁷ |
| **Aluminium oxide** | 3.433 × 10⁻⁷ | 3.650 × 10⁻⁷ | 3.663 × 10⁻⁷ |
| **hydroxide (boehmite)** | | | |
| **Iron(III) oxide** | 8.889 × 10⁻⁸ | 8.940 × 10⁻⁸ | 8.938 × 10⁻⁸ |
| **Silicon dioxide (trigonal)** | | | 3.723 × 10⁻⁵ |

**Table 4: Concentrate B (mol) (only concentrations > 1 × 10⁻⁶ mol)**

| **Component** | **Pass 1** | **pass 2** | **pass 3** |
|---|---|---|---|
| Water | 8.5114 | 9.6243 | 9.6414 |
| Hydrogen chloride | 2.1682 | 2.3109 | 2.4194 |
| Disodium oxide | 0.0438 | 0.0548 | 0.0487 |
| Magnesium oxide | 0.0555 | 0.1111 | 0.1666 |
| Calcium oxide | 0.9804 | 0.9807 | 0.9810 |
| Dipotassium oxide | 4.860 × 10⁻³ | 9.719 × 10⁻³ | 0.0146 |
| Hydrogen bromide | 8.135 × 10⁻⁴ | 1.627 × 10⁻⁵ | 2.441 × 10⁻³ |
| Carbon dioxide | 2.924 × 10⁻⁴ | 5.408 × 10⁻⁴ | 7.727 × 10⁻⁴ |
| Silicon dioxide | 1.068 × 10⁻⁴ | 2.136 × 10⁻⁴ | 2.832 × 10⁻⁴ |
| (amorphous) | | | |
| Hydrogen fluoride | 6.767 × 10⁻⁵ | 1.353 × 10⁻⁴ | 2.030 × 10⁻⁴ |
| Strontium | 9.245 × 10⁻⁵ | 1.849 × 10⁻⁴ | 2.773 × 10⁻⁴ |
| monoxide | | | |
| Argon | 1.502 × 10⁻⁵ | 3.004 × 10⁻⁵ | 4.506 × 10⁻⁵ |
| Dinitrogen | 1.785 × 10⁻⁵ | 3.570 × 10⁻⁵ | 3.355 × 10⁻⁵ |
| pentoxide | | | |
| Metaboric acid | 4.255 × 10⁻⁴ | 8.510 × 10⁻⁴ | 1.276 × 10⁻⁴ |
| (monoclinic) | | | |
| Sulphur trioxide | 8.610 × 10⁻⁵ | 8.475 × 10⁻⁵ | 6.692 × 10⁻⁵ |
| Dilithium oxide | 1.297 × 10⁻⁵ | 2.593 × 10⁻⁵ | 3.890 × 10⁻⁵ |

**Table 5: Concentrate C (only dissolved components) (mol) (only**

| **concentrations > 1 × 10⁻⁶ mol)** | | | |
|---|---|---|---|
| **Component** | **pass 1** | **pass 2** | **pass 3** |
| Water | 5.0000 | 5.0000 | 5.0000 |
| Hydrogen chloride | 2.1682 | 2.3109 | 2.4194 |
| Disodium oxide | 0.0438 | 0.0548 | 0.0487 |
| Magnesium oxide | 0.0555 | 0.1111 | 0.1666 |
| Calcium oxide | 0.9804 | 0.9807 | 0.9810 |
| Dipotassium oxide | 4.860 × 10⁻³ | 9.719 × 10⁻³ | 0.0146 |
| Hydrogen bromide | 8.135 × 10⁻⁴ | 1.627 × 10⁻³ | 2.440 × 10⁻³ |
| Carbon dioxide | 2.924 × 10⁻⁴ | 5.408 × 10⁻⁴ | 7.727 × 10⁻⁴ |
| Silicon dioxide (amorphous) | 1.068 × 10⁻⁴ | 2.136 × 10⁻⁴ | 2.832 × 10⁻⁴ |
| Hydrogen fluoride | 6.767 × 10⁻⁵ | 1.353 × 10⁻⁴ | 2.030 × 10⁻⁴ |
| Strontium monoxide | 9.245 × 10⁻⁵ | 1.849 × 10⁻⁴ | 2.773 × 10⁻⁴ |
| Argon | 1.502 × 10⁻⁵ | 3.004 × 10⁻⁵ | 4.506 × 10⁻⁵ |
| Dinitrogen pentoxide | 1.785 × 10⁻⁵ | 3.270 × 10⁻⁵ | 5.355 × 10⁻⁵ |
| Metaboric acid (monoclinic) | 4.255 × 10⁻⁴ | 8.510 × 10⁻⁴ | 1.276 × 10⁻³ |
| Sulphur trioxide | 8.610 × 10⁻⁵ | 8.475 × 10⁻⁵ | 6.692 × 10⁻⁵ |
| Dilithium oxide | 1.297 × 10⁻⁵ | 2.593 × 10⁻⁵ | 3.890 × 10⁻⁵ |

**Table 6: Solids formed in MD II in concentrate C (mol)**

| **Component** | **pass 1** | **pass 2** | **pass 3** |
|---|---|---|---|
| Sodium chloride | 0.0526 | 0.0749 | 0.0629 |
| Calcium | 3.201 × 10⁻⁵ | 4.408 × 10⁻⁵ | 3.601 × 10⁻⁵ |
| carbonate | | | |
| Calcium sulphate | 5.619 × 10⁻⁵ | 6.428 × 10⁻⁵ | 5.270 × 10⁻⁵ |
| Silicon dioxide | | 7.530 × 10⁻⁵ | 1.502 × 10⁻⁴ |
| (trigonal) | | | |

### Example 2

Solution A is a CaCl₂ solution made with a concentration of 40 wt.% CaCl₂ in demineralised water. Solution A has a density (at 20 °C) of 1.395 g/ml. Solution B is a NaCl solution made with a concentration of 14 wt.% NaCl in demineralised water. Solution B has a density (at 20 °C) of 1.102 g/ml. Solution A and B are mixed in a weight ratio of 3 to 1.8 to produce the feed solution of the membrane distillation process. The feed solution then contains 25 wt.% CaCl₂ and 5.2 wt.% NaCl (with a density at 20 °C of 1.280 g/1).

A membrane/osmotic distillation setup is used with a single membrane sheet (0.051 m² surface area) and on both sides of the membrane first a flow channel for the supernatant on one side and the drawing liquid on the second side of the membrane. The membrane used is a hydrophobic membrane suitable for membrane distillation as described in WO-A-2000/72947. The obtained feed solution (supernatant) is circulated over the first side of the membrane at a temperature of 65 °C. On the second side of the membrane a drawing liquid is circulated at a temperature of 75 °C. This drawing liquid is a CaCl₂ solution with a concentration of 43-44 wt.%. Due to the temperature difference an average flux of pure water through the membrane is obtained of 0.5-1.5 l/m²·h. The produced pure water condensed into the drawing liquid which is in this lab setup regenerated by evaporation. The concentration of the drawing liquid is kept constant this way. Due to the evaporation of water through the membrane, the supernatant is concentrated (by 5 vol.%). The volume of pure water produced is replaced with a NaCl solution of 250 g/l (batch wise with an average interval of 15-30 minutes in which the supernatant is repeatedly concentrated (5 vol.%) and then again diluted to its original CaCl₂ concentration). After the maximum solubility of NaCl in the 25 wt.% CaCl₂ solution is exceeded, crystallisation takes place within the system. The produced crystals are partially collected in a settler vessel, and part of the crystals is kept in circulation due to the circulation velocity in the system. The superficial velocity in the membrane module is kept between 0.1 and 0.2 m/s.

Figure 2 shows the results of an experiment A performed as described in this example 2.

The used membrane area in the test cell is 0.051 m². From start up to timestamp t = 2.6 h, the solution on the feed side is not yet completely saturated. Evaporation of pure water from the feed (supernatant) to the distillate side and concentration of the feed occurs. This causes a reduction of vapour pressure on the feed side and therefore a reduction in driving force (vapour pressure difference) and as a consequence a reduction in flux. The concentration of the drawing liquid is kept between 43-44 wt.% of CaCl₂ (the first point in the graph at timestamp t = 0.7 h; equilibrium of temperature has not yet been reached)

On timestamp t = 2.6 h the first crystals are visible in the liquid of the feed.

From this point until the end of the experiment (timestamp 8.8 h) a total of 60 g of salt (NaCl) has been recovered and a total of 240 ml of pure water was transported through the membrane.

This results in an average water flux of 0.76 l/m²·h and a salt production of 0.19 kg/m²·h (per m² membrane area).

The temperature on the feed side was set at 65 °C and on the draw side at 75 °C.

The flux is defined as the total amount of water in dm³ transported through the pores of the membrane in a period of time of one hour through a membrane with a contact area of 1 m².

The specific flux is defined as the total amount of water in m³ transported through the pores of the membrane in a period of time of 1 s through a membrane with a contact area of 1 m² at a vapour pressure difference of 1 Pa. The specific flux is obtained by dividing the measured flux through the vapour pressure difference (obtained from the measured temperature and fluid concentration).

The specific flux is used for comparison during an experiment to show the stability of the system, even when small variations in temperature and concentration show small variation in flux.

## Claims

1. Process for separating a first compound from an aqueous feed stream wherein the first compound is dissolved, comprising:
- adding a crystallisation agent to said feed stream, thereby causing at least part of said first compound to crystallise, resulting in a mixture of crystals and a liquid,
- separating at least part of the crystals from the liquid, leaving a supernatant,
- subjecting at least part of the supernatant to a membrane separation process, thereby reducing the mass fraction of water in the supernatant and producing a concentrate;
wherein the crystallisation agent comprises a second compound with a higher solubility in water than the first compound; **characterized in that** said second compound comprises a compound dissolved in the feed stream different from the first compound, wherein the second compound comprises an inorganic salt, wherein said membrane separation process comprises membrane distillation, osmotic distillation or a combination of both,
wherein the method further comprises adding at least part of the concentrate to said feed stream as crystallisation agent.

2. Process according to claim 1, wherein the first compound comprises one or more selected from the group consisting of inorganic salts, organic salts, organic compounds, polymers, sugars and proteins.

3. Process according to claim 2, wherein the first compound comprises an inorganic salt.

4. Process according to claim 2, wherein the first compound comprises sodium chloride.

5. Process according to claim 4, wherein the feed stream comprises one or more selected from the group consisting of seawater, seawater concentrate and sodium chloride brine.

6. Process according to any one of claims 1-5, wherein said membrane separation process comprises membrane distillation, wherein in said membrane distillation a vapour is selectively passed through a membrane that is impermeable to the liquid phase and wherein the driving force is a partial vapour pressure difference provided at least in part by a temperature gradient over the membrane.

7. Process according to claim 1, wherein the second compound comprises one or more selected from the group consisting of magnesium chloride, calcium chloride, potassium chloride, magnesium bromide, calcium bromide and potassium bromide.

8. Process according to any one of claims 1-7, wherein the concentration of the first compound in the supernatant is reduced by 50 % or more, compared to the concentration of the first compound in the feed stream.

9. Process according to any one of claims 1-8, wherein the membrane separation process comprises in addition one or more selected from the group consisting of membrane distillation, forward osmosis and osmotic distillation; preferably osmotic distillation.

10. Process according to any of claims 1-9 wherein during said membrane separation process one side of the membrane is contacted with said supernatant and the other side is contacted with a drawing liquid.

11. Process according to any one of claims 1-10, further comprising concentrating the feed stream prior to adding crystallisation agent.

12. Process according to any of claims 1-11, further comprising washing at least part of the separated crystals.

13. Process according to any of claims 1-12, further comprising replenishing said crystallisation agent at least in part.

14. Process according to any one of claims 1-13, wherein 50 wt.% or more of the first compound in the feed stream is crystallised and separated.

15. Process according to any one of claims 1-14, wherein the process is a continuous process.

## Patentansprüche

1. Verfahren zum Trennen einer ersten Verbindung aus einem wässrigen Beschickungsstrom, wobei die erste Verbindung gelöst ist, umfassend:
Zugeben eines Kristallisationsmittels zu dem Beschickungsstrom, dadurch Herbeiführen der Kristallisation wenigstens eines Teils der ersten Verbindung, Resultieren in einer Mischung aus Kristallen und einer Flüssigkeit,
- Trennen wenigstens eines Teils der Kristalle von der Flüssigkeit, Zurücklassen eines Überstands,
- Unterziehen wenigstens eines Teils des Überstands einem Membrantrennungsverfahren, dadurch Reduzieren des Massenanteils von Wasser in dem Überstand und Herstellen eines Konzentrats;
wobei das Kristallisationsmittel eine zweite Verbindung mit einer höheren Löslichkeit in Wasser als die erste Verbindung umfasst; **dadurch gekennzeichnet, dass** die zweite Verbindung eine Verbindung, gelöst in dem Beschickungsstrom, verschieden von der ersten Verbindung, umfasst, wobei die zweite Verbindung ein anorganisches Salz umfasst, wobei das Membrantrennungsverfahren Membrandestillation, osmotische Destillation oder eine Kombination aus beiden umfasst, wobei das Verfahren ferner Zugeben wenigstens eines Teils des Konzentrats zu dem Beschickungsstrom als Kristallisationsmittel umfasst.

2. Verfahren nach Anspruch 1, wobei die erste Verbindung eine oder mehrere umfasst, ausgewählt aus der Gruppe bestehend aus anorganischen Salzen, organischen Salzen, organischen Verbindungen, Polymeren, Zuckern und Proteinen.

3. Verfahren nach Anspruch 2, wobei die erste Verbindung ein anorganisches Salz umfasst.

4. Verfahren nach Anspruch 2, wobei die erste Verbindung Natriumchlorid umfasst.

5. Verfahren nach Anspruch 4, wobei der Beschickungsstrom eines oder mehrere umfasst, ausgewählt aus der Gruppe bestehend aus Meerwasser, Meerwasserkonzentrat und Natriumchlorid-Sole.

6. Verfahren nach einem der Ansprüche 1 - 5, wobei das Membrantrennungsverfahren Membrandestillation umfasst, wobei bei der Membrandestillation ein Dampf selektiv durch eine Membran geleitet wird, die für die flüssige Phase undurchlässig ist, und wobei die treibende Kraft eine Partialdampfdruckdifferenz ist, bereitgestellt wenigstens teilweise durch einen Temperaturgradienten über der Membran.

7. Verfahren nach Anspruch 1, wobei die zweite Verbindung eine oder mehrere umfasst, ausgewählt aus der Gruppe bestehend aus Magnesiumchlorid, Calciumchlorid, Kaliumchlorid, Magnesiumbromid, Calciumbromid und Kaliumbromid.

8. Verfahren nach einem der Ansprüche 1 - 7, wobei die Konzentration der ersten Verbindung in dem Überstand um 50 % oder mehr, verglichen zu der Konzentration der ersten Verbindung in dem Beschickungsstrom, reduziert wird.

9. Verfahren nach einem der Ansprüche 1 - 8, wobei das Membrantrennungsverfahren zusätzlich eines oder mehrere umfasst, ausgewählt aus der Gruppe bestehend aus Membrandestillation, Vorwärtsosmose und osmotischer Destillation; vorzugsweise osmotischer Destillation.

10. Verfahren nach einem der Ansprüche 1 - 9, wobei während des Membrantrennungsverfahrens eine Seite der Membran mit dem Überstand kontaktiert wird und die andere Seite mit einer Ziehflüssigkeit kontaktiert wird.

11. Verfahren nach einem der Ansprüche 1 - 10, ferner umfassend Konzentrieren des Beschickungsstroms vor Zugeben von Kristallisationsmittel.

12. Verfahren nach einem der Ansprüche 1 - 11, ferner umfassend Waschen wenigstens eines Teils der getrennten Kristalle.

13. Verfahren nach einem der Ansprüche 1 - 12, ferner umfassend wenigstens teilweises Nachfüllen des Kristallisationsmittels.

14. Verfahren nach einem der Ansprüche 1 - 13, wobei 50 Gew.-% oder mehr der ersten Verbindung in dem Beschickungsstrom kristallisiert und getrennt werden.

15. Verfahren nach einem der Ansprüche 1 - 14, wobei das Verfahren ein kontinuierliches Verfahren ist.

## Revendications

1. Procédé pour la séparation d'un premier composé d'un courant d'alimentation aqueux dans lequel le premier composé est dissous, consistant à :
- ajouter un agent de cristallisation audit courant d'alimentation, occasionnant par-là qu'au moins une partie dudit premier composé cristallise, résultant en un mélange de cristaux et un liquide,
- séparer au moins une partie des cristaux du liquide, laissant une matière surnageante,
- soumettre au moins une partie de la matière surnageante à un procédé de séparation par membrane, réduisant par-là la fraction de masse d'eau dans la matière surnageante et produisant un concentré ;
dans lequel l'agent de cristallisation comprend un second composé avec une solubilité dans l'eau supérieure au premier composé ; **caractérisé en ce que** ledit second composé comprend un composé dissous dans le courant d'alimentation différent du premier composé, dans lequel le second composé comprend un sel inorganique, dans lequel ledit procédé de séparation par membrane comprend une distillation par membrane, une distillation osmotique ou une combinaison des deux,
dans lequel le procédé comprend de plus l'addition d'au moins une partie du concentré audit courant d'alimentation comme agent de cristallisation.

2. Procédé selon la revendication 1, dans lequel le premier composé comprend un ou plusieurs choisis dans le groupe consistant en sels inorganiques, sels organiques, composés organiques, polymères, sucres et protéines.

3. Procédé selon la revendication 2, dans lequel le premier composé comprend un sel inorganique.

4. Procédé selon la revendication 2, dans lequel le premier composé comprend du chlorure de sodium.

5. Procédé selon la revendication 4, dans lequel le courant d'alimentation comprend un ou plusieurs choisis dans le groupe consistant en eau de mer, concentré d'eau de mer et saumure de chlorure de sodium.

6. Procédé selon l'une quelconque des revendications 1-5, dans lequel ledit procédé de séparation par membrane comprend une distillation par membrane, dans lequel dans ladite distillation par membrane une vapeur passe sélectivement à travers une membrane qui est imperméable à la phase liquide et dans lequel la force d'entraînement est une différence de pression partielle de vapeur fournie au moins en partie par un gradient de température sur la membrane.

7. Procédé selon la revendication 1, dans lequel le second composé comprend un ou plusieurs choisis dans le groupe consistant en chlorure de magnésium, chlorure de calcium, chlorure de potassium, bromure de magnésium, bromure de calcium et bromure de potassium.

8. Procédé selon l'une quelconque des revendications 1-7, dans lequel la concentration du premier composé dans la matière surnageante est réduite de 50 % ou plus, en comparaison à la concentration du premier composé dans le courant d'alimentation.

9. Procédé selon l'une quelconque des revendications 1-8, dans lequel le procédé de séparation par membrane comprend de plus un ou plusieurs choisis dans le groupe consistant en une distillation par membrane, une osmose directe et une distillation osmotique ; de préférence une distillation osmotique.

10. Procédé selon l'une quelconque des revendications 1-9, dans lequel pendant ledit procédé de séparation par membrane un côté de la membrane est mis en contact avec ladite matière surnageante et l'autre côté est mis en contact avec un liquide de soutirage.

11. Procédé selon l'une quelconque des revendications 1-10, comprenant de plus la concentration du courant d'alimentation avant l'addition d'agent de cristallisation.

12. Procédé selon l'une quelconque des revendications 1-11, comprenant de plus le lavage d'au moins une partie des cristaux séparés.

13. Procédé selon l'une quelconque des revendications 1-12, comprenant de plus le réapprovisionnement dudit agent de cristallisation au moins en partie.

14. Procédé selon l'une quelconque des revendications 1-13, dans lequel 50 % en masse ou plus du premier composé dans le courant d'alimentation sont cristallisés et séparés.

15. Procédé selon l'une quelconque des revendications 1-14, dans lequel le procédé est un procédé continu.
